# EUROPÄISCHE PATENTSCHRIFT

(11) **EP 2 617 080 B1**
(45) Veröffentlichungstag und Bekanntmachung des Hinweises auf die Patenterteilung: **04.06.2014**
(21) Anmeldenummer: 11745953.7
(22) Anmeldetag: 09.08.2011
(51) Int. Cl.: H01M 2/02, B60L 11/18, H01M 10/052

(54) **BATTERIEGEHÄUSE, BATTERIE MIT BATTERIEGEHÄUSE UND KRAFTFAHRZEUG MIT EINER ENTSPRECHENDEN BATTERIE**
BATTERY HOUSING, BATTERY COMPRISING A BATTERY HOUSING, AND MOTOR VEHICLE COMPRISING A CORRESPONDING BATTERY
BOÎTIER D'ACCUMULATEUR, ACCUMULATEUR COMPORTANT LE BOÎTIER D'ACCUMULATEUR ET VÉHICULE AUTOMOBILE ÉQUIPÉ D'UN ACCUMULATEUR CORRESPONDANT

(30) Priorität: 14.09.2010 DE 102010040731
(43) Veröffentlichungstag der Anmeldung: 24.07.2013
(73) Patentinhaber: Robert Bosch GmbH, 70442 Stuttgart (DE); Samsung SDI Co., Ltd., Yongin-si, Gyeonggi-do 446-577 (KR)
(72) Erfinder: HIRSCHBURGER, Wolfgang, Reutlingen 72762 (GB); SCHINDLER, Frank, 72762 Reutlingen (DE)
(74) Vertreter: Bee, Joachim
(86) Internationale Anmeldenummer: PCT/EP2011/063667
(87) Internationale Veröffentlichungsnummer: WO 2012/034788

(56) Entgegenhaltungen:
- DE-A1-102007 018 753
- DE-B- 1 771 093
- GB-A- 582 499
- JP-A- 4 260 886
- JP-A- 2001 291 494

## Beschreibung

Die vorliegende Erfindung betrifft ein Batteriegehäuse, eine Batterie mit diesem Batteriegehäuse und ein Kraftfahrzeug mit dieser Batterie.

### Stand der Technik

Stand der Technik ist es, für den Aufbau eines Gehäuses für Li-Ionen-Batterien den Werkstoff Stahl oder zur Reduzierung der Masse Aluminium zu verwenden. Auch die Verwendung von mehrschichtigen Blechen ist bekannt. So geht aus der EP 0 945 209 B1 ein Blech für ein Batteriegehäuse hervor, welches korrosionsresistent sein und die Kosten zur Herstellung einer Batterie senken können soll. Dazu wird vorgeschlagen, dass das Blech für ein Batteriegehäuse aus einem mehrlagigen Stahl mit einem Grundblech und zumindest einem Beschichtungsblech auf zumindest einer Oberfläche des Grundblechs besteht.

Stahl als Werkstoff für Gehäuse von Li-Ionen-Batterien ist zwar ausreichend stabil und durchbrandsicher, weist jedoch ein relativ hohes spezifisches Gewicht auf, so dass ein aus Stahl aufgebautes Batteriegehäuse eine relativ hohe Masse aufweist.

Wird anstelle von Stahl Aluminium verwendet, lässt sich die Masse des Batteriegehäuses verringern, jedoch auf Kosten der Stabilität und Durchbrandsicherheit. Daneben können sich bei Vibrationen Risse im Aluminium bilden, welche die Festigkeit des Batteriegehäuses und den Widerstand gegen Penetration herabsetzen. Eine Penetration des Batteriegehäuses durch einen Fremdkörper, beispielsweise bei einem Unfall, kann zu einer Durchdringung einer oder mehrerer Batteriezellen führen, wodurch ein interner oder externer Kurzschluss entstehen kann. Bei Li-Ionen-Batteriezellen kann dies zu einem so genannten Thermal Runaway führen, einer exothermen Reaktion, bei der es zu einem Brand kommen kann und giftige Stoffe freigesetzt werden.

Aus der JP 2001 291494 A ist ein Batteriegehäuse bekannt, welches eine aus rostfreiem Stahl bzw. Aluminium bestehende Innenschicht/Innenplatte sowie eine aus mit Fiberglas verstärktem Plastik bestehende Außenschicht/Außenplatte besteht. Des Weiteren offenbart die DE 1771093 B ein aus Kunststoff bestehendes Gehäuse, dessen Wandungen eine Einlage aufweisen. Diese Einlage besteht aus metallischen oder metallisierten Fasern, welche miteinander zu einem ebenen oder räumlichen Netzwerk stoffschlüssig miteinander verbunden sind. Nach dem Einlegen der stoffschlüssig verbundenen Fasern wird das Netzwerk von Kunststoff durchtränkt und abschließend innenseitig und außenseitig mit von Fasern freien Auflagen versehen.

Aus der Luft- und Raumfahrttechnik sind Faser-Metall-Laminate bekannt. So zeigt die DE 10 2007 018 753 A1 für Flugzeugpassagiere einen Brandschutzraum mit einer Rumpfbehäutung aus Faser-Metall-Laminaten, der einen länger als 4 Minuten dauernden Durchbrandschutz gewährleisten soll. Der Rumpf eines Luft- oder Raumfahrzeuges umfasst dazu eine eine Außenhaut aufweisende Rumpfsektion, wobei zumindest die Außenhaut der Rumpfsektion des Rumpfes aus einem glasfaserverstärkten Aluminium-Laminat besteht.

### Offenbarung der Erfindung

Erfindungsgemäß wird ein Batteriegehäuse zur Verfügung gestellt, bei dem wenigstens ein Teil aus einem Faserverbundwerkstoff gefertigt ist, wobei der Faserverbundwerkstoff ein Verbund aus Metall und Zusatzfasern ist, dadurch gekennzeichnet, dass der Verbund ein Laminat aus abwechselnd angeordneten Metallschichten und die Zusatzfasern enthaltenden Zusatzfaserschichten ist und die Metallschichten und Zusatzfaserschichten miteinander verklebt sind, wobei das Laminat Standard-GLARE und/oder High-Static-Strength-GLARE ist. Auf diese Weise kann in dem erfindungsgemäßen Batteriegehäuse vorteilhaft ein Faserverbund erzeugt werden, ohne dass die Zusatzfasern direkt im Metall angeordnet sind. Als Matrix für die Zusatzfasern kann so herkömmlicher Kunststoff beziehungsweise Harz eingesetzt werden.

Hiermit ist vorteilhaft eine gute Haltbarkeit zwischen den verschiedenen Schichten gewährleistet, die einfach und damit günstig zu erzeugen ist.

Außerdem ist es vorteilhaft ermöglicht, einen industriell gefertigten und damit preisgünstigen und gut verfügbaren Verbundwerkstoff einzusetzen.

Das Wort GLARE ist ein Akronym und steht für glass-fibre reinforced aluminium. GLARE ist ein Verbundwerkstoff, der aus vielen, jeweils nur wenige Zehntel Millimeter dicken Schichten besteht. Diese Schichten bestehen abwechselnd aus Aluminiumschichten und Glasfaserschichten, wobei die Glasfasern in den Glasfaserschichten in einer Matrix aus Harz beziehungsweise Kunststoff angeordnet sind. Die Schichten sind unter Druck verklebt.

GLARE weist gegenüber bloßem Aluminium vorteilhaft bessere Durchbrandsowie Einschlagverhalten auf. Einer Penetration des Batteriegehäuses oder einer Ausbreitung von Feuer ist somit besser vorgebeugt. Ein weiterer Vorteil gegenüber bloßem Aluminium ist das Verhalten bei Rissen. So werden Risse durch die Glasfaserschichten überbrückt, so dass die Rissgeschwindigkeit mit zunehmender Risslänge abnimmt, während bei bloßem Aluminium die Rissgeschwindigkeit stark zunimmt. Zudem ist das Batteriegehäuse durch eine funktionsoptimierte Faserorientierung für bestimmte Belastungszustände gezielt anpassbar.

Erfindungsgemäß wird zudem eine Batterie bereitgestellt, mit einem Batteriegehäuse in einer der zuvor genannten Ausgestaltungen. Die Vorteile des erfindungsgemäßen Batteriegehäuses als Bauteil kommen so auch der Batterie als Baugruppe zugute. Die Batterie ist dabei bevorzugt eine Li-Ionen-Batterie.

Der Begriff Batterie schließt in dieser Anmeldung auch Batteriesysteme, Akkumulatorbatterien, Akkumulatoren, Akkumulatorsysteme, insbesondere Li-Ionen-Systeme oder Li-Polymer-Ionen-Systeme mit ein.

Erfindungsgemäß wird weiterhin ein Kraftfahrzeug bereitgestellt, mit einer Batterie, welche ein Batteriegehäuse in einer der zuvor genannten Ausgestaltungen umfasst, wobei die Batterie mit einem Antriebssystem des Kraftfahrzeugs verbunden ist. Die Vorteile der erfindungsgemäßen Batterie als Bauteil kommen so auch dem Kraftfahrzeug als Baugruppe zugute.

Vorteilhafte Weiterbildungen der Erfindung sind in den Unteransprüchen angegeben und in der Beschreibung charakterisiert.

### Zeichnungen

Die Erfindung wird anhand von drei Zeichnungen und der nachfolgenden Beschreibung näher erläutert. Es zeigen:
Figur 1 eine Batterie mit einem erfindungsgemäßen Batteriegehäuse;
Figur 2 einen Ausschnitt eines nicht erfindungsgemäßen Batteriegehäuses in einer möglichen Ausgestaltung; und
Figur 3 einen Ausschnitt eines erfindungsgemäßen Batteriegehäuses in einer weiteren möglichen Ausgestaltung.

### Ausführungsformen der Erfindung

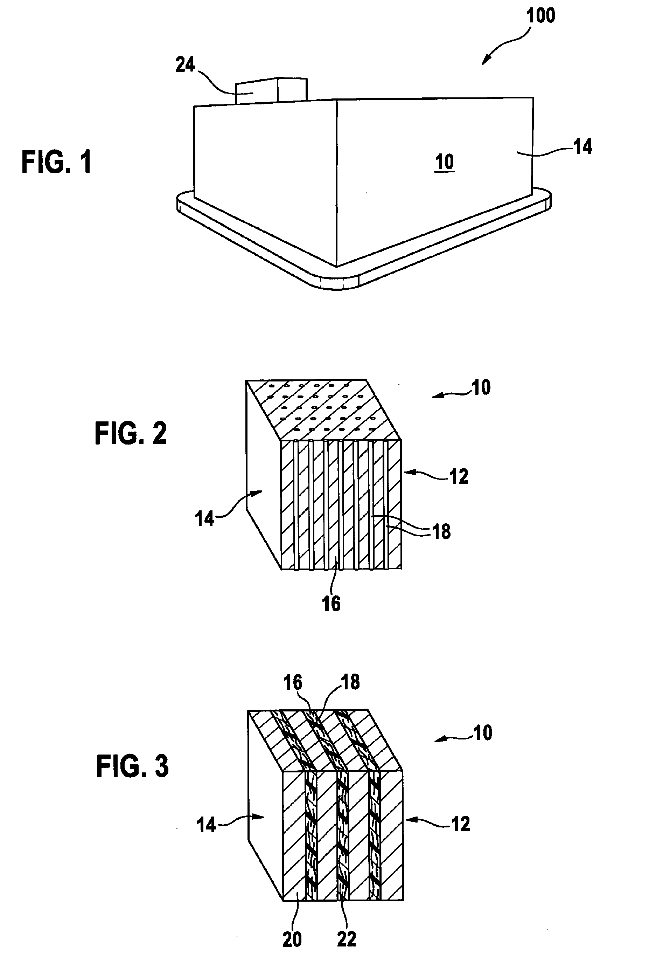

Figur 1 zeigt eine Batterie 100 mit einem beispielhaften, aber nicht beschränkenden, erfindungsgemäßen Batteriegehäuse 10. Das Batteriegehäuse 10 ist zumindest in Teilen aus einem Faserverbundwerkstoff gefertigt. Die Batterie 100 weist zudem einen Terminal 24 zum Anschließen von Zugangsbeziehungsweise Abgangsleitungen auf. Der Terminal 24 kann erfindungsgemäß auch als Hochvolt- und Niedervolt-Terminals getrennt voneinander ausgeführt sein. Diese wiederum können auch getrennt voneinander an allen Seiten des Batteriegehäuses 10 positioniert sein.

Mögliche Ausgestaltungen des erfindungsgemäßen Batteriegehäuses 10 sind in den Figuren 2 und 3 dargestellt.

Figur 2 zeigt beispielhaft, aber nicht beschränkend, eine mögliche Ausgestaltung eines nicht erfindungsgemäßen Batteriegehäuses 10. Die Abbildung zeigt skizzenhaft eine Materialprobe des Batteriegehäuses 10 aus einem Faserverbundwerkstoff. Das Batteriegehäuse 10 weist eine Innenseite 12 und eine Außenseite 14 auf. Bei einer montierten Batterie 100 zeigt die Innenseite 12 zu Batteriezellen der Batterie und die Außenseite 14 zeigt zur Umgebung. Das Batteriegehäuse 10 umschließt also die Batteriezellen.

Das erfindungsgemäße Batteriegehäuse 10 ist dabei zumindest teilweise aus einem Faserverbundwerkstoff gefertigt. Ein Ausschnitt dieses Teils ist jeweils in den Figuren 2 und 3 dargestellt. Der Faserverbundwerkstoff umfasst in einer Matrix 16 eingeschlossene Zusatzfasern 18. In Figur 2 verlaufen diese Zusatzfasern im Wesentlichen unidirektional parallel zur Innen- bzw. Außenseite 12 und 14. Erfindungsgemäß sind ebenfalls andere Anordnungen der Zusatzfasern 18 vorgesehen. Die Zusatzfasern 18 können auch bi- oder mehrdirektional angeordnet sein, in einem Gelege oder einem Gewebe. Die Anordnung ist dabei auf die gewünschte Charakteristik des Batteriegehäusematerials abgestimmt.

In Figur 2 ist als Matrix 16 ein Metall dargestellt. Erfindungsgemäß können auch andere Materialien verwendet werden. Bevorzugt kommt entsprechend der Ausgestaltung in Figur 2 Aluminium bzw. eine Aluminiumlegierung zum Einsatz.

Die Zusatzfasern 18 sind bevorzugt Glasfasern. Auch andere Faserarten sind erfindungsgemäß möglich, beispielsweise Kohlefasern oder Aramidfasern.

Figur 3 zeigt beispielhaft, aber nicht beschränkend, eine bevorzugte Ausgestaltung des erfindungsgemäßen Batteriegehäuses 10. Hierbei ist der Verbund in mehreren dünnen Schichten, also einem Laminat, hergestellt. In Figur 3 sind abwechselnd Metallschichten 20 und Zusatzfaserschichten 22 angeordnet. Bevorzugt sind die verschiedenen Schichten 20 und 22 miteinander verklebt.

Das Laminat ist bevorzugt so aufgebaut, dass die Metallschichten 20 und Zusatzfaserschichten 22 abwechselnd angeordnet sind. Die Zusatzfaserschichten 22 weisen eine Matrix 16 auf, die die Zusatzfasern 18 bindet. Die Anordnung der Zusatzfasern 18 innerhalb der Zusatzfaserschichten 22 kann erfindungsgemäß auf unterschiedliche Weise erfolgen. So sind auch hier unidirektionale, bi- oder mehrdirektionale Gelege oder Gewebe möglich.

Im Unterschied zu Figur 2 sind die Zusatzfasern in Figur 3 nicht auf der gesamten Breite angeordnet, sondern nur in den Zusatzfaserschichten 22. Die Zusatzfaserschichten 22 können erfindungsgemäß aus Kunststoffen oder einem zur Metallschicht 20 unterschiedlichen Metall bestehen. Bevorzugt ist die Matrix 16 bei dieser Anordnung jedoch aus einem Harz, Polyesterharz oder Epoxydharz gebildet. Erfindungsgemäß sind die Metallschichten 20 bevorzugt aus Aluminium beziehungsweise einer Aluminiumlegierung hergestellt. In bevorzugter Ausgestaltung der Erfindung sind an der Innenseite 12 und an der Außenseite 14 Metallschichten 20 angeordnet.

## Patentansprüche

1. Batteriegehäuse (10), bei dem wenigstens ein Teil des Batteriegehäuses (10) aus einem Faserverbundwerkstoff gefertigt ist, wobei der Faserverbundwerkstoff ein Verbund aus Metall und Zusatzfasern ist, **dadurch gekennzeichnet, dass** der Verbund ein Laminat aus abwechselnd angeordneten Metallschichten (20) und die Zusatzfasern (18) enthaltenden Zusatzfaserschichten (22) ist und die Metallschichten (20) und Zusatzfaserschichten (22) miteinander verklebt sind, wobei das Laminat Sfandard-Glasfaserverstärktes Aluminium (GLARE) und/oder High-Static-Strength-GLARE ist.

2. Batterie mit einem Batteriegehäuse (10) nach Anspruch 1.

3. Kraftfahrzeug mit einer Batterie nach Anspruch 2, wobei die Batterie mit einem Antriebssystem des Kraftfahrzeugs verbunden ist.

## Claims

1. Battery housing (10), in which at least part of the battery housing (10) is produced from a fibre composite material, the fibre composite material being a composite of metal and additional fibres, **characterized in that** the composite is a laminate of alternately arranged metal layers (20) and additional-fibre layers (22), containing the additional fibres (18), and the metal layers (20) and additional-fibre layers (22) are adhesively bonded to one another, the laminate being standard glass-fibre-reinforced aluminium (GLARE) and/or high-static-strength GLARE.

2. Battery comprising a battery housing (10) according to Claim 1.

3. Motor vehicle comprising a battery according to Claim 2, the battery being connected to a drive system of the motor vehicle.

## Revendications

1. Boîtier de batterie (10), dans lequel au moins une partie du boîtier de batterie (10) est fabriquée à partir d'un matériau composite renforcé par des fibres, le matériau composite renforcé par des fibres étant un composite constitué de métal et de fibres additionnelles, **caractérisé en ce que** le composite est un stratifié constitué de couches métalliques (20) et de couches de fibres additionnelles (22) contenant les fibres additionnelles (18), lesquelles couches métalliques et couches de fibres additionnelles sont disposées en alternance, et les couches métalliques (20) et les couches de fibres additionnelles (22) sont collées les unes aux autres, le stratifié étant un aluminium renforcé par des fibres de verre (GLARE) standard et/ou un GLARE à haute résistance statique.

2. Batterie comprenant un boîtier de batterie (10) selon la revendication 1.

3. Véhicule automobile comprenant une batterie selon la revendication 2, dans lequel la batterie est connectée à un système d'entraînement du véhicule automobile.
